Europäisches Patentamt

**European Patent Office**

Office européen des brevets

(19)

(11) Publication number: **0 145 035**

**A1**

(12)

# EUROPEAN PATENT APPLICATION

(21) Application number: **84201297.3**

(22) Date of filing: **10.09.84**

(51) Int. Cl.⁴: **C 08 L 23/26**
C 08 F 8/46, C 08 L 27/06
C 08 L 51/06
//(C08L27/06, 23:26),
(C08L27/06, 51:06)

(30) Priority: **10.09.83 NL 8303140**

(43) Date of publication of application:
**19.06.85 Bulletin 85/25**

(84) Designated Contracting States:
**BE DE FR GB IT LU NL**

(71) Applicant: **Limburgse Vinyl Maatschappij N.V.**
**Neerstraat 5**
**B-3980 Tessenderlo(BE)**

(72) Inventor: **Schepers, Herman Augustinus Johannes**
**Leentstraat 33**
**NL-6171 LC Stein(NL)**

(72) Inventor: **Debets, Wilhelmus Antonius Marie**
**Dr. Philipsstraat 91**
**NL-6136 XX Sittard(NL)**

(74) Representative: **van Golde, Lambertus Maria Gerardus**
**T. et al,**
**OCTROOIBUREAU DSM P.O. Box 9**
**NL-6160 MA Geleen(NL)**

(54) Rubber-based impact-resistance improver and a process of producing such an impact-resistance improver.

(57) The invention accords to a new rubber-based impact-resistance improver which at least consists of
(a) 10 parts by weight of carboxylated rubber,
(b) 0 - 25 parts by weight of uncarboxylated rubber, and
(c) 1 - 20 parts by weight of a copolymer at least consisting of vinyl alcohol groups and vinyl chloride groups in a molar ratio of between 1 : 5 and 1 : 50 and a process for preparing such an impact-resistance improver.

The impact-resistance improver according to the invention is extremely suitable for improvement of the impact-resistance of vinyl chloride homo- and copolymers containing at least 70 mol % vinyl chloride units and can be employed also in other polymers, e.g. in ABS, SAN and polyvinylidine chloride.

EP 0 145 035 A1

Croydon Printing Company Ltd.

RUBBER-BASED IMPACT-RESISTANCE IMPROVER AND A PROCESS OF PRODUCING SUCH
AN IMPACT-RESISTANCE IMPROVER

The invention relates to a new rubber-based impact-resistance improver characterized in that it consists at least of

(a) 10 parts by weight of carboxylated rubber,

(b) 0 - 25 parts by weight of uncarboxylated rubber, and

(c) 1 - 20 parts by weight of a polymer at least consisting of vinyl alcohol groups and vinyl chloride groups in a molar ratio of between 1 : 5 and 1 : 50, preferably between 1 : 8 and 1 : 20.

Preferably, the polymer composition according to the invention consists at least of

(a) 10 parts by weight of carboxylated rubber,

(b) 0 - 15 parts by weight of uncarboxylated rubber, and

(c) 2 - 10 parts by weight of the said polymer which at least consists of vinyl alcohol groups and vinyl chloride groups.

In most cases the carboxylated rubber used is a carboxylated ethylene-propylene-diene rubber (EPDM rubber) containing, for instance, 0.1 - 10 % by weight of maleic anhydride groups. A suitable way of preparing such a carboxylated ethylene-propylene-diene rubber, and examples of such rubbers, are mentioned in British Patent No. 1,436,981, to the contents of which reference is here made for brevity.

An uncarboxylated rubber that can be suitably employed is an ethylene-propylene rubber (EPM rubber) and/or an ethylene-propylene diene rubber (EPDM rubber).

A suitable way of preparing the polymer which at least consists of vinyl alcohol groups and vinyl chloride groups is copolymerization of vinyl acetate and vinyl chloride followed by saponification of the resulting polymer. In addition to the monomer groups mentioned, the polymer may contain minor amounts, e.g. up to 30 mol %, of other monomer groups. Suitable monomers are ethylene, vinylidine chloride, vinyl esters of carboxylic acids with, e.g. 1 - 20 C atoms per carboxylic acid molecule, by preference 1 - 6 C atoms per molecule of carboxylic acid, such as vinyl acetate, vinyl propionate, etc.

The impact-resistance improver of this invention may, if so desired, contain additives, such as stabilizers, processing aids, e.g. lubricants, pigments, fillers, polymeric additives, etc.

The impact-resistance improver according to the invention is extremely suitable for improvement of the impact resistance of vinyl chloride homo- and copolymers containing at least 70 mol % vinyl chloride units and can be employed also in other polymers, e.g. in ABS, SAN and polyvinylidene chloride. It is mostly used in amounts of 1 - 25 parts by weight of impact-resistance improver to 100 parts by weight of polymer.

The impact-resistance improver according to the invention can be prepared in a known manner from the several ingredients, by methods usually employed for the purpose. In dependence on the form in which the ingredients are available (powder, crumb, liquid), various apparatuses or combinations thereof may be applied, such as mixing rollers, a rapid mixer, Banbury mixer, kneader-extruder, etc.

A very suitable way of preparing the impact-resistance improver according to the invention consists in that a mixing device, e.g. a pair of mixing rollers, is fed with the desired amount, e.g. 20 parts by weight, of carboxylated rubber, the desired amount, e.g. 1-20 parts by weight, of a polymer which at least consists of vinyl alcohol groups and vinyl chloride groups in a molar ratio of between 1 : 5 and 1 : 50 and, optionally, the desired amount, e.g. 0-25 parts by weight, of uncarboxylated rubber, and by preference, per 100 parts by weight of rubber, 0.1 - 20 parts by weight of one or more conventional esterification-accelerators, e.g. esterification accelerators based on an organic metal compound, such as dibutyl tin maleate, tetrabutoxy titanium, magnesium stearate and or zinc stearate, and, optionally, further ingredients. Thereafter these substances are mixed for 0.5 - 120 minutes, preferably for 1 - 30 minutes, at a temperature of 425 - 500 K, by preference at 425 - 475 K. Next, the resulting mixture is, if so desired, subjected to extraction with a solvent for the said polymer which at least consists of vinyl alcohol groups and vinyl chloride groups so as to extract polymer not bound to the carboxylated rubber. It is possible afterwards to isolate the said polymer from the extract, which polymer can then be re-used in the production of the impact-resistance improver. Suitable extraction agents are substances in which the said polymer is readily soluble whereas the rubber employed is poorly soluble in them, e.g. acetone.

A polymer composition that has been given impact-resistance by means of an impact-resistance improver according to the invention is particularly suitable for the manufacture of objects which have to satisfy high requirements as regards mechanical and physical properties, such as impact resistance, stiffness, etc., e.g. pipes, bottles, furniture elements, dashboards for motorcars, casings and housings for electronic equipment and domestic appliances, heels for shoes, caravans, skis and surfboards.

The invention will be further elucidated by means of the following examples and comparative experiments, without being restricted thereto.

Example I

A mixer composed of two rollers having a diameter of 80 mm and a width of 200 mm, with a friction of 1 : 1.2, receives 40 g carboxylated EPDM rubber with 1.3 % wt. maleic anhydride groups, and 40 g of a polymer consisting of 10 mol % vinyl alcohol groups, 89 mol % vinyl chloride groups and 1 mol % vinyl acetate groups.

These substances are mixed for 5 minutes at a temperature of 433 K, with a speed of about 35 rpm.

By means of a similar mixer 8 g of the resulting mixture is mixed with 72 g of a polyvinyl chloride having a K value of 70.5, an Izod value according to ASTM D 256 of 5 kJ/m$^2$ and a flexural modulus according to ASTM D 790 of 3150 N/mm$^2$, 0.2 g octadecyl-3-(3,5-di-tertiary-butyl-4-hydroxyphenyl)propionate and 0.4 g dibutyl tin maleate, for 20 minutes at a temperature of 433 K and with a speed of about 35 rpm.

The polymer composition prepared in this way possesses an Izod value according to ASTM D 256 of over 120 kJ/m$^2$ and a flexural modulus according to ASTM D 790 of 2690 N/mm$^2$.

Example II

A mixer as described in Example I receives 40 g carboxylated EPDM rubber with 2.3 % wt. maleic anhydride groups, and 40 g of a polymer consisting of 10 mol % vinyl alcohol groups, 89 mol % vinyl chloride groups and 1 mol % vinyl acetate groups.

These substances are mixed for 5 minutes at a temperature of 433 K, with a speed of about 35 rpm.

By means of a similar mixer 16 g of the resulting mixture is mixed with 64 g of the same polyvinyl chloride as used in Example I and 0.16 g octadecyl-3-(3,5-di-tertiary-butyl-4-hydroxyphenyl)propionate and 0.4 g dibutyl tin maleate, for 10 minutes at a temperature of 433 K and with a speed of about 35 rpm.

The polymer composition prepared in this way has an Izod value according to ASTM D 256 of over 120 kJ/m$^2$ and a flexural modulus according to ASTM D 790 of 2210 N/mm$^2$.

### Example III

A mixer as described in Example I receives 40 g carboxylated EPDM rubber with 2.3 % wt. maleic anhydride groups, and 32 g of a polymer consisting of 10 mol % vinyl alcohol groups, 89 mol % vinyl chloride groups and 1 mol % vinyl acetate groups.

These substances are mixed for 5 minutes at a temperature of 433 K, with a speed of about 35 rpm..

By means of a similar mixer 14.4 g of the resulting mixture is mixed with 65.6 g of the same polyvinyl chloride as described in Example I, 0.16 g octadecyl-3-(3,5-di-tertiary-butyl-4-hydroxyphenyl)propionate and 0.4 g dibutyl tin maleate for 10 minutes at a temperature of 433 K and with a speed of about 35 rpm.

The polymer composition prepared in this way has an Izod value according to ASTM D 256 of 115 kJ/m$^2$ and a flexural modulus according to ASTM D 790 of 2180 N/mm$^2$.

### Example IV

A mixer as described in Example I receives 20 g carboxylated EPDM rubber with 1.3 % wt. maleic anhydride groups, 20 g of a polymer consisting of 10 mol % vinyl alcohol groups, 89 mol % vinyl chloride groups and 1 mol % vinyl acetate groups, and 1 g dibutyl tin maleate.

These substances are treated for 20 minutes on the rollers at a temperature of 453 K, with a speed of about 35 rpm.

The resulting mixture is next extracted with acetone for one hour at 323 K.

By means of a similar mixer 10 g of the non-dissolved portion of this mixture is mixed with 70 g of the same polyvinyl chloride as used in Example I, 0.2 g octadecyl-3-(3,5-di-tertiary-butyl-4-hydroxy-phenyl)propionate and 0.2 g dibutyl tin maleate, for 12 minutes at a temperature of 433 K and with a speed of about 35 rpm.

The polymer composition prepared in this way has an Izod value according to ASTM D 256 of over 120 kg/m$^2$ and a flexural modulus according to ASTM D 790 of 2290 N/mm$^2$.

Example V

A mixer as described in Example I receives 50 g carboxylated EPDM rubber with 1.3 % wt. maleic anhydride groups, 50 g of a polymer consisting of 10 mol % vinyl alcohol groups, 89 mol % vinyl chloride groups and 1 mol % vinyl acetate groups, and 2.5 g dibutyl tin maleate.

These substances are treated on the rollers for 20 minutes at a temperature of 453 K, with a speed of about 35 rpm.

The resulting mixture is then extracted with acetone in the same way as described in Example IV.

By means of a similar mixer 10 g of the non-dissolved portion of this mixture is mixed with 70 g of the same polyvinyl chloride as used in Example I, 0.2 g octadecyl-3-(3,5-di-tertiary-butyl-4-hydroxy-phenyl)propionate and 0.2 g dibutyl tin maleate, for 12 minutes at a temperature of 433 K and with a speed of about 35 rpm.

The polymer composition prepared in this way has an Izod value according to ASTM D 256 of 111 kg/m$^2$ and a flexural modulus according to ASTM D 790 of 2200 N/mm$^2$.

Comparative Experiment A

A mixer as described in Example I receives 80 g of the same polyvinyl chloride as described in Example I, 0.2 g octadecyl-3-(3,5-di-tertiary-butyl-4-hydroxyphenyl)propionate, and 0.8 g dibutyl tin maleate.

These substances are mixed for 25 minutes at a temperature of 433 K and with a speed of about 35 rpm.

The resulting mixture has an Izod value according to ASTM D 256 of 5 kJ/m$^2$ and a flexural modulus according to ASTM D 790 of 3100 N/mm$^2$.

Comparative Experiment B

A mixer as described in Example I receives 75.2 g of the same polyvinyl chloride as described in Example I, 4.8 g uncarboxylated EPDM rubber, 0.2 g octadecyl-3-(3,5-di-tertiary-butyl-4-hydroxyphenyl)-propionate, and 0.8 g dibutyl maleate.

These substances are mixed for 25 minutes at a temperature of 433 K and with a speed of about 35 rpm.

The polymer composition prepared in this way has an Izod value according to ASTM D 256 of 15 kJ/m$^2$ and a flexural modulus according to ASTM D 790 of 2490 N/mm$^2$.

Comparative Experiment C

A mixer as described in Example I receives 75.2 % of the same polyvinyl chloride as described in Example I, 4.8 g carboxylated EPDM rubber with 1.3 % wt. maleic anhydride groups, 0.2 g octadecyl-3-(3,5-di-tertiary-butyl-4-hydroxyphenyl)propionate, and 0.8 g dibutyl tin maleate.

These substances are mixed for 25 minutes at a temperature of 433 K and with a speed of about 35 rpm.

The polymer composition prepared in this way has an Izod value according to ASTM D 256 of 10 kJ/m$^2$ and a flexural modulus according to ASTM D 790 of 2520 N/mm$^2$.

Comparative Experiment D

A mixer as described in Example I receives 75.2 g of the same polyvinyl chloride as described in Example I, 2.8 g uncarboxylated EPDM rubber, 2 g carboxylated EPDM rubber with 1.3 % wt. maleic anhydride groups, 0.2 g octadecyl-3-(3.5-di-tertiary-butyl-4-hydroxy-phenyl)-propionate, and 0.8 g dibutyl tin maleate.

These substances are mixed for 25 minutes at a temperature of 433 K and with a speed of 35 rpm.

The polymer composition prepared in this way has an Izod value according to ASTM D 256 of 14 kJ/m$^2$ and a flexural modulus according to ASTM D 790 of 2380 N/mm$^2$.

The results of the examples and the comparative experiments are listed in the table below. In this table

I     : indicates the number of the example or the comparative experiment;

II    : the quantity of PVC used, in g;

III   : the quantity of impact-resistance improver used, in g;

IV : the quantity of un-carboxylated EPDM rubber used, in g;

V : the quantity of carboxylated EPDM rubber used, in g;

VI : the quantity of octadecyl-3-(3,5-di-tertiary-butyl-4-hydroxy-phenyl)propionate used, in g;

VII : the quantity of dibutyl tin maleate in the end product, in g;

VIII : the Izod value measured, in $kJ/m^2$;

IX : the flexural modulus measured, in $N/mm^2$.

| I | II | III | IV | V | VI | VII | VIII | IX |
|---|-----|------|-----|-----|------|------|------|------|
| I | 72 | 8 | | | 0.2 | 0.4 | 120 | 2690 |
| II | 64 | 16 | | | 0.16 | 0.4 | 120 | 2210 |
| III | 65.6 | 14.4 | | | 0.16 | 0.4 | 120 | 2180 |
| IV | 70 | 10 | | | 0.2 | 0.2 | 120 | 2290 |
| V | 70 | 10 | | | 0.2 | 0.2 | 111 | 2200 |
| A | 80 | | | | 0.2 | 0.8 | 5 | 3100 |
| B | 75.2 | | 4.8 | | 0.2 | 0.8 | 15 | 2490 |
| C | 75.2 | | | 4.8 | 0.2 | 0.8 | 10 | 2520 |
| D | 75.2 | | 2.8 | 2 | 0.2 | 0.8 | 14 | 2380 |

CLAIMS

1. Rubber-based impact resistance improver characterized in that it at least consists of

    (a) 10 parts by weight of carboxylated rubber,

    (b) 0 - 25 parts by weight of uncarboxylated rubber, and

    (c) 1 - 20 parts by weight of a copolymer at least consisting of vinyl alcohol groups and vinyl chloride groups in a molar ratio of between 1 : 5 and 1 : 50.

2. Impact-resistance improver according to claim 1 or 2, characterized in that it at least consists of

    (a) 10 parts by weight of carboxylated rubber,

    (b) 0 - 15 parts by weight of uncarboxylated rubber, and

    (c) 2 - 10 parts by weight of the said copolymer which at least consists of vinyl alcohol groups and vinyl chloride groups.

3. Impact-resistance improver according to claim 1 or 2, characterized in that the carboxylated rubber used is a carboxylated ethylene-propylene-diene rubber containing by preference 0.1 - 10 % by weight of maleic anhydride groups.

4. Impact-resistance improver according to any one of the claims 1 - 3, characterized in that the uncarboxylated rubber used is an ethylene-propylene rubber and/or ethylene-propylene-diene rubber.

5. Process of preparing a rubber-based impact-resistance improver, characterized in that a mixing device is fed with 10 parts by weight of carboxylated rubber, 0 - 25 parts by weight of uncarboxylated rubber, 1 - 20 parts by weight of a polymer which at least consists of vinyl alcohol groups and vinyl chloride groups in a molar ratio of between 1 : 5 and 1 : 50, and, optionally, other additions, and in that these substances are subsequently mixed for 0.5 - 120 minutes at 425 - 500 K.

6. Process according to claim 5, characterized in that per 100 parts by weight of rubber 0.1 - 20 parts by weight of one or more conventional esterification accelerators is supplied.

7. Process according to claim 5 or 6, characterized in that the resulting mixture is subjected to extraction with a solvent for the said polymer which at least consists of vinyl alcohol groups and vinyl chloride groups in which the rubber used is poorly soluble in which process acetone is preferred as said solvent.

8.  Impact-resistance improver by a process according to any one of the claims 5 - 7.

9.  Impact-resistant polymer containing an impact-resistance improver according to any one of the claims 1 - 4 or 8.

10. Object made in whole or in part of a polymer according to claim 9.

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | EP-A-0 014 018 (STAMICARBON)<br>* claims 1-19 *<br><br>--- | 1 | C 08 L 23/26<br>C 08 F 8/46<br>C 08 L 27/06<br>C 08 L 51/06 //<br>(C 08 L 27/06 |
| A | EP-A-0 037 686 (ROHM & HAAS)<br>* claims 1-10 *<br><br>--- | 1 | C 08 L 23:26 )<br>(C 08 L 27/06<br>C 08 L 51:06 ) |
| A | FR-A-2 319 667 (BAYER)<br>* claims 1-7 *<br><br>--- | 1 | |
| A | EP-A-0 052 872 (STAUFFER)<br>* claims 1-7 *<br><br>--- | 1 | |
| A | US-A-4 055 581 (G.C. HOPKINS)<br>* claim 1 *<br><br>----- | 1 | |

| | TECHNICAL FIELDS SEARCHED (Int. Cl.4) |
|---|---|
| | C 08 L<br>C 08 F |

The present search report has been drawn up for all claims

| Place of search | Date of completion of the search | Examiner |
|---|---|---|
| THE HAGUE | 31-01-1985 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82